# EUROPÄISCHE PATENTANMELDUNG

(11) **EP 4 729 309 A1**
(43) Veröffentlichungstag der Anmeldung: **22.04.2026**
(21) Anmeldenummer: 25202399.9
(22) Anmeldetag: 16.09.2025
(51) Int. Cl.: B60C 11/03, B60C 11/12

(54) **LAUFSTREIFEN UND FAHRZEUGREIFEN MIT LAUFSTREIFEN**

(30) Priorität: 16.10.2024 DE 102024210007
(71) Anmelder: Continental Reifen Deutschland GmbH, 30175 Hannover (DE)
(72) Erfinder: Brockmann, Jürgen, 30175 Hannover (DE); Berger, Christoph, 30175 Hannover (DE); Seng, Matthias, 30175 Hannover (DE); Brandau, Christian, 30175 Hannover (DE); Subramanian Sivanarutchelvi, Manickaraj, 30175 Hannover (DE)
(74) Vertreter: Continental Corporation

(57) **Zusammenfassung**

Laufstreifen für einen Fahrzeugreifen, umfassend
eine Lauffläche (1), die mindestens einen Profilblock (2) aufweist,
wobei der Profilblock (2) eine erste Profilblockkante (3), eine zweite Profilblockkante (4) und eine Lamelle (6) umfasst,
wobei die erste Profilblockkante (3) einen ersten Winkel (11) kleiner 90° zu einer Längsrichtung (8) des Laufstreifens aufweist,
wobei die zweite Profilblockkante (4) mit der ersten Profilblockkante (3) einen zweiten Winkel (12) kleiner 90° einschließt,
wobei ein Übergangsabschnitt (9) der Lamelle (6) mit der zweiten Profilblockkante (4) einen dritten Winkel (13) zwischen 80° und 100° einschließt,
wobei die Lamelle (6) sich in einem ersten Tiefenabschnitt (18) unter einem vierten Winkel (14) kleiner 90° von der Lauffläche (1) und in einem sich an den ersten Tiefenabschnitt (18) anschließenden zweiten Tiefenabschnitt (19) senkrecht zu der Lauffläche (1) in den Profilblock (2) erstreckt.

## Beschreibung

Die Erfindung betrifft einen Laufstreifen für einen Fahrzeugreifen, der eine Lauffläche, die mindestens einen Profilblock aufweist, umfasst. Der Profilblock umfasst eine erste Profilblockkante, eine zweite Profilblockkante und eine Lamelle, wobei die erste Profilblockkante einen ersten Winkel kleiner 90° zu einer Längsrichtung des Laufstreifens aufweist, wobei die zweite Profilblockkante mit der ersten Profilblockkante einen zweiten Winkel kleiner 90° einschließt und wobei ein Übergangsabschnitt der Lamelle mit der zweiten Profilblockkante einen dritten Winkel zwischen 80° und 100° einschließt.

Ein Fahrzeugreifen mit einem derartigen Laufstreifen ist aus der DE 10 2014 215 251 A1 bekannt. Die DE 10 2014 215 251 A1 offenbart einen Fahrzeugluftreifen mit einem Profilelemente aufweisenden Laufstreifen, wobei ein Profilelement mit mehreren parallel zueinander und beabstandet voneinander angeordneten Feineinschnitten versehen ist.

Die US 7,878,228 B2 offenbart einen Schwerlastreifen mit einem Laufflächenabschnitt, der mit drei sich in Umfangsrichtung kontinuierlich erstreckenden Rippen versehen ist, wobei die Rippen Seitenkanten aufweisen und jede der Seitenkanten in Abständen in der Umfangsrichtung des Reifens mit Kantenlamellen versehen ist.

Die US 2017/0326919 A1 offenbart einen Luftreifen für Fahrzeuge, aufweisend eine Lauffläche mit einer Blockreihe, die in Umfangsrichtung umläuft und durch eine Umfangsrille von weiteren Profilpositivs getrennt ist und deren Profilblöcke in Umfangsrichtung durch Querrillen voneinander getrennt sind sowie Blockkanten und Lamellen aufweisen.

Die US 11,077,716 B2 offenbart einen Laufflächenabschnitt eines Reifens mit einer Hauptrille und einem Block.

Dem Stand der Technik ist gemeinsam, dass die offenbarten Winterreifen und Ganzjahresreifen Lamellen aufweisen, die beispielsweise eine verbesserte Haftung auf Schnee ermöglichen. Dabei werden die Lamellen typischerweise mit den Profilblöcken gleich ausgerichtet (parallele Lamellierung). Bei stark geneigten Profilblöcken mit parallelen Lamellen treten spitze Winkel zwischen den seitlichen Profilblockkanten und den Enden der Lamellen auf. Die spitzen Winkel führen zu lokalen weichen Gummibereichen und damit zu einem unregelmäßigen Verschleiß oder zu einem lokalen Ablösen der Oberfläche, woraus sich wiederum ein unansehnliches Aussehen des Fahrzeugreifens ergibt. Ferner weisen die äußeren Profilblöcke eine geringere Seitensteifigkeit auf, was wiederum zu einer verminderten Manövrierfähigkeit führt. Weitergehende Verbesserungen hinsichtlich einer stärkeren Haftung bei Schnee erfolgen nicht.

Vor diesem Hintergrund liegt der Erfindung die erste technische Aufgabe zugrunde, einen Laufstreifen zur Verfügung zu stellen, der neben eines geringeren Verschleißes und einer verbesserten Manövrierfähigkeit die Schneeperformance verbessert. Ferner liegt der Erfindung die zweite Aufgabe zugrunde, einen Fahrzeugreifen mit einem geringeren Verschleiß, mit einer verbesserten Manövrierfähigkeit und mit einer verbesserten Schneeperformance zur Verfügung zu stellen.

Die erstgenannte Aufgabe wird gelöst durch einen Laufstreifen mit den Merkmalen gemäß Anspruch 1. Die zweitgenannte Aufgabe wird gelöst durch einen Fahrzeugreifen mit den Merkmalen gemäß nebengeordnetem Anspruch 10. Die Unteransprüche betreffen vorteilhafte Ausführungsformen der Erfindung.

Erfindungsgemäß ist ein Laufstreifen mit den Merkmalen nach Anspruch 1 offenbart.

Der erfindungsgemäße Laufstreifen ist zur Verwendung mit einem Fahrzeugreifen ausgebildet. In einem bestimmungsgemäßen Gebrauch des Laufstreifens mit einem Fahrzeugreifen, d.h. als Teil des Fahrzeugreifens, weist der Laufstreifen genähert die Form eines Mantels eines Kreiszylinders auf. Als separater Laufstreifen ist somit eine Länge in einer Längsrichtung des Laufstreifens gleich einer Länge entlang einer Umfangsrichtung des Fahrzeugreifens.

Der Laufstreifen weist im bestimmungsgemäßen Gebrauch mit einem Fahrzeugreifen zudem eine radial außen liegende Lauffläche auf, die mit einer Straßenoberfläche in Kontakt tritt. Die Lauffläche weist ein Reifenprofil auf, welches mindestens einen Profilblock umfasst. Der Profilblock ist zu anderen möglichen Profilblöcken durch Rillen getrennt, so dass eine Rillenwand einer der Rillen mit einer Profilblockkante des Profilblocks gleich ist.

Der Profilblock umfasst eine erste Profilblockkante, die zu der Längsrichtung des Laufstreifens einen ersten Winkel kleiner 90° aufweist. Hierdurch wird der Abfluss des von dem Reifenprofil wegzuleitenden Wassers verbessert.

Der Profilblock umfasst zudem eine zweite Profilblockkante, die mit der ersten Profilblockkante einen zweiten Winkel kleiner 90° einschließt. Die Ausbildung eines spitzen Winkels zwischen der ersten Profilblockkante und der zweiten Profilblockkante führt zu einer Reduzierung von Verwirbelungen beim Abfluss des von dem Reifenprofil wegzuleitenden Wassers. Des Weiteren wird das von dem Reifenprofil wegzuleitende Wasser ebenfalls an der zweiten Profilblockkante entlang weggeleitet.

Der Profilblock umfasst ferner eine Lamelle. Im bestimmungsgemäßen Gebrauch des Laufstreifens mit einem Fahrzeugreifen weist die Lamelle eine radial außenliegende Öffnung auf, die sich beim Fahren je nach Fahrsituation schließen und wieder öffnen kann, wodurch sich die Griffigkeit des Fahrzeugreifens erhöht. Die Lamelle ist in mindestens zwei Abschnitte unterteilt. Ein erster Abschnitt der beiden Abschnitte der Lamelle, bezeichnet als Übergangsabschnitt, mündet in die zweite Profilblockkante. Der Übergangsabschnitt schließt mit der zweiten Profilblockkante einen dritten Winkel ein, der zwischen 80° und 100° liegt. Ein großer Winkel zwischen dem Übergangsabschnitt und der zweiten Profilblockkante erhöht die Steifigkeit an der Mündung des Übergangsabschnittes der Lamelle zu der Profilblockkante, woraus sich eine gleichmäßigere Abnutzung des Laufstreifens bzw. im bestimmungsgemäßen Gebrauch des Laufstreifens mit dem Fahrzeugreifen eine gleichmäßigere Abnutzung des Fahrzeugreifens ergibt.

Erfindungsgemäß erstreckt sich die Lamelle in einem ersten Tiefenabschnitt unter einem vierten Winkel kleiner 90° von der Lauffläche und in einem sich an den ersten Tiefenabschnitt anschließenden zweiten Tiefenabschnitt senkrecht zu der Lauffläche in den Profilblock hinein. D.h., die Lamelle weist zwei Tiefenabschnitte auf, die sich in dem Profilblock erstrecken, nämlich den ersten Tiefenabschnitt und den zweiten Tiefenabschnitt. Der zweite Tiefenabschnitt erstreckt sich von einem Lamellengrund senkrecht in Richtung der Lauffläche und geht in den ersten Tiefenabschnitt über. Der erste Tiefenabschnitt mündet in die Lauffläche, wobei der Einfall der Mündung durch den vierten Winkel, der kleiner 90° ist, definiert ist. In einem bestimmungsgemäßen Gebrauch des Laufstreifens mit dem Fahrzeugreifen weist die Erstreckung des ersten Tiefenabschnitts damit eine von einer radialen Richtung des Fahrzeugreifens abweichende Richtung auf.

Neben dem geringeren Verschleiß durch die höhere Steifigkeit an der Mündung des Übergangsabschnittes der Lamelle mit der Profilblockkante führt das Erstrecken der Lamelle in einem ersten Tiefenabschnitt unter dem vierten Winkel kleiner 90° von der Lauffläche und in einem zweiten Tiefenabschnitt senkrecht von der Lauffläche in den Profilblock zu einer verbesserten Schneeperformance des Laufstreifens. Durch das Anstellen des äußeren Lamellenbereiches in Laufrichtung wird ferner ein besseres Trockenbremsen erzielt, da ein Einrollen der Kanten und ein damit einhergehender lokaler Kontaktverlust vermieden wird.

Besonders vorteilhaft ist ein Laufstreifen mit den weiteren Merkmalen gemäß Anspruch 2.

Gemäß der vorteilhaften Ausführungsform des Laufstreifens ist der dritte Winkel 90°. D.h., die Lamelle mündet senkrecht in die zweite Profilblockkante. Die senkrechte Ausbildung der Mündung der Lamelle in die zweite Profilblockkante führt zu einer maximalen Steifigkeit des Eckbereiches zwischen der Lamelle und der zweiten Profilblockkante. Die maximale Steifigkeit führt wiederum zu einer minimalen Unregelmäßigkeit in der Abnutzung des Laufstreifens bzw. im bestimmungsgemäßen Gebrauch des Laufstreifens mit einem Fahrzeugreifen zu einer minimalen Unregelmäßigkeit in der Abnutzung des Fahrzeugreifens. Zudem führt die senkrechte Ausbildung der Mündung der Lamelle in die zweite Profilblockkante zu einer maximalen Seitensteifigkeit bei den äußeren Profilblöcken. Eine Änderung des dritten Winkels zu einem kleineren Wert oder zu einem größeren Wert führt zu einer größeren Unregelmäßigkeit in der Abnutzung des Laufstreifens bzw. des Fahrzeugreifens sowie zu einer kleineren Seitensteifigkeit bei den äußeren Profilblöcken.

Der vorteilhafte Laufstreifen mit dem Merkmal des dritten Winkels gleich 90° weist im bestimmungsgemäßen Gebrauch mit einem Fahrzeugreifen neben dem geringeren Verschleiß, der verbesserten Schneeperformance und der verbesserten Manövrierfähigkeit die weiteren Vorteile einer weiteren Erhöhung der Steifigkeit an der Mündung des Übergangsabschnittes der Lamelle mit der zweiten Profilblockkante und somit eine weitere Verbesserung der gleichmäßigen Abnutzung, der Manövrierfähigkeit sowie der Schneeperformance auf.

Besonders vorteilhaft ist ein Laufstreifen mit den weiteren Merkmalen gemäß Anspruch 3.

Gemäß der vorteilhaften Ausführungsform des Laufstreifens ist der zweite Winkel kleiner 60°. D.h., die erste Profilblockkante und die zweite Profilblockkante bilden einen spitzen Winkel. Die erste Profilblockkante und die zweite Profilblockkante sind derart angeordnet, dass der eingeschlossene Winkel eine Ecke formt, die in Längsrichtung des Laufstreifens bzw. im bestimmungsgemäßen Gebrauch des Laufstreifens mit einem Fahrzeugreifen in Umlaufrichtung des Fahrzeugreifens ausgebildet ist. Die so ausgebildete Ecke leitet das Wasser entlang der ersten Profilblockkante als auch entlang der zweiten Profilblockkante ab, so dass Verwirbelungen eines Wasserflusses bei einer den Wasserfluss führenden Rille durch eine seitlich abgehende weitere Rille reduziert werden.

Der vorteilhafte Laufstreifen mit dem Merkmal des zweiten Winkels kleiner 60° weist im bestimmungsgemäßen Gebrauch mit einem Fahrzeugreifen neben dem geringeren Verschleiß, der verbesserten Schneeperformance und der verbesserten Manövrierfähigkeit den weiteren Vorteil einer Reduzierung von Verwirbelungen eines im Laufstreifen abzuleitenden Wasserflusses auf, um das Risiko von Aquaplaning weiter zu reduzieren.

Besonders vorteilhaft ist ein Laufstreifen mit den weiteren Merkmalen gemäß Anspruch 4.

Gemäß der vorteilhaften Ausführungsform des Laufstreifens ist der erste Winkel kleiner 60°. D.h., die erste Profilblockkante und die Längsrichtung des Laufstreifens bilden einen spitzen Winkel. Die erste Profilblockkante ist zu der Längsrichtung des Laufstreifens derart angeordnet, dass die erste Profilblockkante eine einen Wasserfluss leitende Barriere formt, so dass der Wasserfluss in Längsrichtung des Laufstreifens bzw. im bestimmungsgemäßen Gebrauch des Laufstreifens mit einem Fahrzeugreifen in Umlaufrichtung des Fahrzeugreifens abgeleitet wird. Hierdurch wird das Ableiten des Wasserflusses verbessert, und im Wasserfluss auftretende Verwirbelungen werden reduziert.

Der vorteilhafte Laufstreifen mit dem Merkmal des ersten Winkels kleiner 60° weist im bestimmungsgemäßen Gebrauch mit einem Fahrzeugreifen neben dem geringeren Verschleiß, der verbesserten Schneeperformance und der verbesserten Manövrierfähigkeit den weiteren Vorteil eines verbesserten Abflusses des vom Laufstreifen abzuleitenden Wassers auf.

Besonders vorteilhaft ist ein Laufstreifen mit den weiteren Merkmalen gemäß Anspruch 5.

Gemäß der vorteilhaften Ausführungsform des Laufstreifens weist die zweite Profilblockkante zu der Längsrichtung einen fünften Winkel auf, wobei der fünfte Winkel kleiner 20°, besonders kleiner 15°, insbesondere kleiner 10° ist. D.h., die zweite Profilblockkante und die Längsrichtung des Laufstreifens bilden einen spitzen Winkel bis sehr spitzen Winkel. Die zweite Profilblockkante ist zu der Längsrichtung des Laufstreifens derart angeordnet, dass die zweite Profilblockkante eine einen Wasserfluss leitende Barriere formt, so dass der Wasserfluss in Längsrichtung des Laufstreifens bzw. im bestimmungsgemäßen Gebrauch des Laufstreifens mit einem Fahrzeugreifen in Umlaufrichtung des Fahrzeugreifens abgeleitet wird. Hierdurch wird das Ableiten des Wasserflusses verbessert, und die im Wasserfluss auftretenden Verwirbelungen werden reduziert. Darüber hinaus wird durch einen fünften Winkel größer 0°, insbesondere in dem Winkelbereich zwischen 9° und 15°, ein LookThrough vermieden, der die Schneeperformance des Laufstreifens verbessert.

Der vorteilhafte Laufstreifen mit dem Merkmal des fünften Winkels kleiner 20° weist im bestimmungsgemäßen Gebrauch mit einem Fahrzeugreifen neben dem geringeren Verschleiß, der verbesserten Schneeperformance und der verbesserten Manövrierfähigkeit den weiteren Vorteil eines verbesserten Abflusses des im Laufstreifen auftretenden Wasserflusses auf.

Besonders vorteilhaft ist ein Laufstreifen mit den weiteren Merkmalen gemäß Anspruch 6.

Gemäß der vorteilhaften Ausführungsform des Laufstreifens ist der Übergangsabschnitt der Lamelle ein erster Übergangsabschnitt. Die Lamelle weist einen zweiten Übergangsabschnitt auf, der entlang der Lauffläche zu einer dritten Profilblockkante des Profilblockes einen sechsten Winkel zwischen 80° und 100° einschließt. D.h., die Lamelle ist in mindestens drei Abschnitte unterteilt. Neben dem ersten Übergangsabschnitt, der in die zweite Profilblockkante mündet und mit der zweiten Profilblockkante den dritten Winkel einschließt, ist ein weiterer Abschnitt der drei Abschnitte der zweite Übergangsabschnitt. Der zweite Übergangsabschnitt schließt mit der dritten Profilblockkante den sechsten Winkel ein, der zwischen 80° und 100° liegt. Ein großer Winkel zwischen dem zweiten Übergangsabschnitt und der dritten Profilblockkante erhöht die Steifigkeit an der Mündung des zweiten Übergangsabschnittes der Lamelle zu der dritten Profilblockkante, woraus sich eine weitere Verbesserung der gleichmäßigeren Abnutzung des Laufstreifens bzw. im bestimmungsgemäßen Gebrauch des Laufstreifens mit dem Fahrzeugreifen eine gleichmäßigere Abnutzung des Fahrzeugreifens ergibt.

Der vorteilhafte Laufstreifen mit dem Merkmal des sechsten Winkels zwischen 80° und 100° weist im bestimmungsgemäßen Gebrauch mit einem Fahrzeugreifen neben dem geringeren Verschleiß, der verbesserten Schneeperformance und der verbesserten Manövrierfähigkeit die weiteren Vorteile der Verbesserung der gleichmäßigeren Abnutzung des Laufstreifens bzw. im bestimmungsgemäßen Gebrauch des Laufstreifens mit dem Fahrzeugreifen der weiteren Verbesserung der gleichmäßigeren Abnutzung des Fahrzeugreifens sowie der weiteren Verbesserung der Schneeperformance und der weiteren Verbesserung der Manövrierfähigkeit auf.

Besonders vorteilhaft ist ein Laufstreifen mit den weiteren Merkmalen gemäß Anspruch 7.

Gemäß der vorteilhaften Ausführungsform des Laufstreifens ist der sechste Winkel 90°. D.h., die Lamelle mündet senkrecht in die dritte Profilblockkante. Die senkrechte Ausbildung der Mündung der Lamelle in die dritte Profilblockkante führt zu einer maximalen Steifigkeit des Eckbereiches zwischen der Lamelle und der dritten Profilblockkante. Die maximale Steifigkeit führt wiederum zu einer minimalen Unregelmäßigkeit in der Abnutzung des Laufstreifens bzw. im bestimmungsgemäßen Gebrauch des Laufstreifens mit einem Fahrzeugreifen zu einer minimalen Unregelmäßigkeit in der Abnutzung des Fahrzeugreifens. Zudem führt die senkrechte Ausbildung der Mündung der Lamelle in die dritte Profilblockkante zu einer maximalen Seitensteifigkeit bei den äußeren Profilblöcken. Eine Änderung des sechsten Winkels zu einem kleineren Wert oder zu einem größeren Wert führt zu einer größeren Unregelmäßigkeit in der Abnutzung des Laufstreifens bzw. des Fahrzeugreifens sowie zu einer kleineren Seitensteifigkeit bei den äußeren Profilblöcken.

Der vorteilhafte Laufstreifen mit dem Merkmal des sechsten Winkels gleich 90° weist im bestimmungsgemäßen Gebrauch mit einem Fahrzeugreifen neben dem geringeren Verschleiß, der verbesserten Schneeperformance und der verbesserten Manövrierfähigkeit die weiteren Vorteile einer weiteren Erhöhung der Steifigkeit an der Mündung des zweiten Übergangsabschnittes der Lamelle mit der dritten Profilblockkante und somit eine weitere Verbesserung der gleichmäßigen Abnutzung, der Manövrierfähigkeit sowie der Schneeperformance auf.

Besonders vorteilhaft ist ein Laufstreifen mit den weiteren Merkmalen gemäß Anspruch 8.

Gemäß der vorteilhaften Ausführungsform des Laufstreifens ist die Lamelle eine erste Lamelle. Der Profilblock weist mindestens eine zweite Lamelle auf. D.h., im bestimmungsgemäßen Gebrauch des Laufstreifens mit einem Fahrzeugreifen weist die zweite Lamelle eine radial außenliegende Öffnung auf, die sich beim Fahren je nach Fahrsituation schließen und wieder öffnen kann.

Der vorteilhafte Laufstreifen mit dem Merkmal der zweiten Lamelle weist im bestimmungsgemäßen Gebrauch des Laufstreifens mit einem Fahrzeugreifen neben dem geringeren Verschleiß, der verbesserten Schneeperformance und der verbesserten Manövrierfähigkeit den weiteren Vorteil eines Erhöhens der Griffigkeit des Fahrzeugreifens auf.

Besonders vorteilhaft ist ein Laufstreifen mit den weiteren Merkmalen gemäß Anspruch 9.

Gemäß der vorteilhaften Ausführungsform des Laufstreifens ist der Profilblock ein erster Profilblock. Der Laufstreifen umfasst senkrecht zu der Längsrichtung des Laufstreifens mindestens einen zweiten Profilblock, wobei der erste Profilblock eine Anzahl an Lamellen aufweist, die sich von einer Anzahl an Lamellen des zweiten Profilblocks unterscheidet. D.h., im bestimmungsgemäßen Gebrauch des Laufstreifens mit einem Fahrzeugreifen liegen der erste Profilblock und der zweite Profilblock entlang einer axialen Richtung hintereinander, wobei die axiale Richtung durch die Drehachse des Fahrzeugreifens definiert ist. Der erste Profilblock kann beispielsweise eine einzelne Lamelle aufweisen, wohingegen der zweite Profilblock zwei Lamellen oder mehr aufweisen kann.

Der vorteilhafte Laufstreifen mit dem Merkmal des zweiten Profilblockes mit der unterschiedlichen Anzahl an Lamellen weist im bestimmungsgemäßen Gebrauch des Laufstreifens mit einem Fahrzeugreifen neben dem geringeren Verschleiß, der verbesserten Schneeperformance und der verbesserten Manövrierfähigkeit den weiteren Vorteil einer Erhöhung der Griffigkeit des Fahrzeugreifens bei trockenen Verhältnissen als auch bei Schneeverhältnissen auf.

Erfindungsgemäß ist ein Fahrzeugreifen mit den Merkmalen gemäß nebengeordnetem Anspruch 10 offenbart. Der erfindungsgemäße Fahrzeugreifen umfasst hierbei einen erfindungsgemäßen Laufstreifen.

Der erfindungsgemäße Fahrzeugreifen weist eine Verbesserung der gleichmäßigen Abnutzung des Fahrzeugreifens sowie eine Verbesserung der Schneeperformance und eine Verbesserung der Manövrierfähigkeit auf.

Weitere Merkmale, Vorteile und Einzelheiten der Erfindung werden nun anhand der Zeichnungen näher beschrieben.

Die Figur 1 zeigt eine erste vorteilhafte Ausführungsform eines Laufstreifens mit einem eine Lamelle aufweisenden Profilblock.

Die Figur 2 zeigt eine weitere vorteilhafte Ausführungsform eines Laufstreifens mit einem eine Lamelle aufweisenden Profilblock, wobei die Lamelle einen zweiten Übergangsabschnitt aufweist.

Die Figur 3 zeigt eine weitere vorteilhafte Ausführungsform eines Laufstreifens mit einem Profilblock, wobei der Profilblock zwei Lamellen aufweist.

Die Figur 4 zeigt eine weitere vorteilhafte Ausführungsform eines Laufstreifens mit einem eine Lamelle aufweisenden Profilblock, wobei der Profilblock einen kleinen fünften Winkel aufweist.

Die Figur 5 zeigt eine weitere vorteilhafte Ausführungsform eines Laufstreifens in einem Längsschnitt.

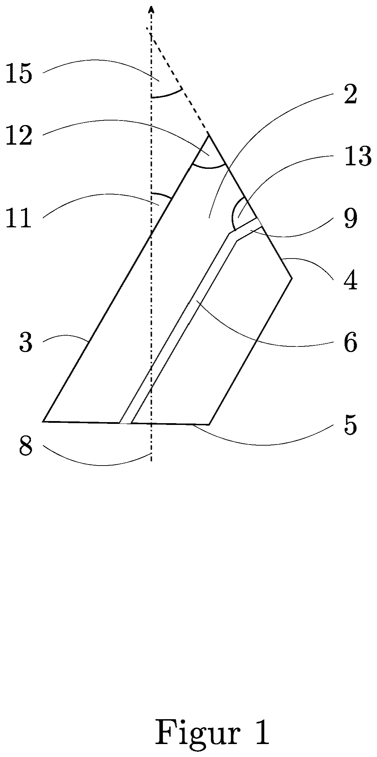

Die Figuren 1 bis 4 zeigen vorteilhafte Ausführungsformen eines Laufstreifens mit einer Lauffläche 1. Die Lauffläche 1 weist ein Reifenprofil auf, welches mindestens einen Profilblock 2 umfasst. Die beispielhaften Profilblöcke 2 in den Figuren 1 bis 4 weisen eine erste Profilblockkante 3, eine zweite Profilblockkante 4, eine dritte Profilblockkante 5 und eine vierte Profilblockkante auf.

Der jeweilige beispielhafte Profilblock 2 in den Figuren 1 bis 4 ist zu einer Längsrichtung 8 des jeweiligen Laufstreifens um einen ersten Winkel 11 gekippt, wobei der erste Winkel 11 zwischen der ersten Profilblockkante 3 und der Längsrichtung 8 des Laufstreifens definiert ist und somit einen Betrag größer 0° aufweist. Ferner ist ein zweiter Winkel 12 zwischen der ersten Profilblockkante 3 und der zweiten Profilblockkante 4 definiert. In einem bestimmungsgemäßen Gebrauch des Laufstreifens mit einem Fahrzeugreifen weist die den zweiten Winkel 12 aufweisende Ecke in Umlaufrichtung. Des Weiteren ist die zweite Profilblockkante 4 gegenüber der Längsrichtung 8 des Laufstreifens gekippt. D.h., die zweite Profilblockkante 4 bildet mit der Längsrichtung 8 des Laufstreifens einen fünften Winkel 15, der größer 0° ist.

Die beispielhaften Profilblöcke 2 in den Figuren 1 bis 4 weisen jeweils eine Lamelle 6 auf, wobei die Lamelle 6 mindestens einen Übergangsabschnitt umfasst. Der Übergangsabschnitt der Lamelle 6 ist der Abschnitt, der in eine Profilblockkante mündet.

Der erste Übergangsabschnitt 9 der Lamelle 6 mündet in die zweite Profilblockkante 4, wobei der erste Übergangsabschnitt 9 und die zweite Profilblockkante 4 einen dritten Winkel 13 definieren. In den vorliegenden Ausführungsformen des Laufstreifens weist der dritte Winkel 13 einen Betrag von 90° auf.

In der Ausführungsform des vorteilhaften Laufstreifens der Figur 1 ist die Lamelle 6 zu der ersten Profilblockkante 3 als auch zu der vierten Profilblockkante 4 parallel angeordnet. Der erste Übergangsabschnitt 9 der Lamelle 6 umfasst eine Länge, die ein Bruchteil der Lamelle 6 ist. Ferner ist der Profilblock 2 zu der Längsrichtung 8 des Laufstreifens um einen ersten Winkel 11 von 30° gekippt und weist eine Trapezform auf. Dabei sind die erste Profilblockkante 3 und eine vierte Profilblockkante parallel zueinander angeordnet und der zweite Winkel 12 weist einen Betrag von 60° auf. Des Weiteren weist der Profilblock 2 einen fünften Winkel 15 von 30° auf.

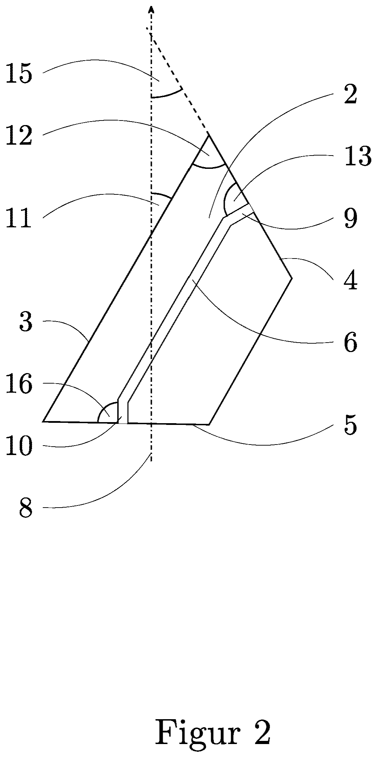

In der Ausführungsform des vorteilhaften Laufstreifens der Figur 2 ist die Lamelle 6 zu der ersten Profilblockkante 3 als auch zu der vierten Profilblockkante 4 parallel angeordnet. Die Lamelle 6 weist neben dem ersten Übergangsabschnitt 9 einen zweiten Übergangsabschnitt 10 auf. Der zweite Übergangsabschnitt 10 mündet in die dritte Profilblockkante 5 des Profilblocks 2. Die dritte Profilblockkante 5 und der zweite Übergangsabschnitt 10 definieren einen sechsten Winkel 16. In der Figur 2 weist der sechste Winkel 16 einen Betrag von 90° auf. Hieraus ergibt sich eine weitere Verbesserung der gleichmäßigeren Abnutzung des Laufstreifens bzw. im bestimmungsgemäßen Gebrauch des Laufstreifens mit dem Fahrzeugreifen eine weitere Verbesserung der gleichmäßigeren Abnutzung des Fahrzeugreifens.

Sowohl der erste Übergangsabschnitt 9 als auch der zweite Übergangsabschnitt 10 weisen jeweils eine Länge auf, die ein Bruchteil der Lamelle 6 ist. Ferner ist der Profilblock 2 zu der Längsrichtung 8 des Laufstreifens um einen ersten Winkel 11 von 30° gekippt und weist eine Trapezform auf. Dabei sind die erste Profilblockkante 3 und eine vierte Profilblockkante parallel zueinander angeordnet und der zweite Winkel 12 weist einen Betrag von 60° auf. Des Weiteren weist der Profilblock 2 einen fünften Winkel 15 von 30° auf.

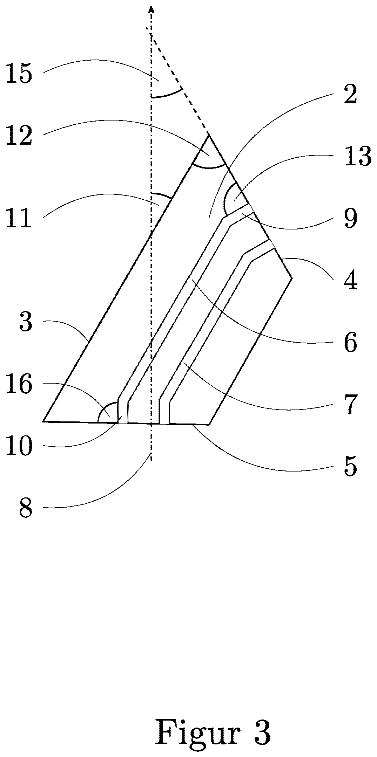

In der Ausführungsform des vorteilhaften Laufstreifens der Figur 3 sind eine erste Lamelle 6 und eine zweite Lamelle 7 dargestellt, wodurch die Griffigkeit des Fahrzeugreifens weiter erhöht wird. Die erste Lamelle 6 und die zweite Lamelle 7 sind parallel zueinander angeordnet. Ferner sind die erste Lamelle 6 und die zweite Lamelle 7 zu der ersten Profilblockkante 3 als auch zu der vierten Profilblockkante 4 parallel angeordnet. Die erste Lamelle 6 weist neben dem ersten Übergangsabschnitt 9 einen zweiten Übergangsabschnitt 10 auf. Der zweite Übergangsabschnitt 10 mündet in die dritte Profilblockkante 5 des Profilblocks 2. Die dritte Profilblockkante 5 und der zweite Übergangsabschnitt 10 definieren einen sechsten Winkel 16. Die zweite Lamelle 7 weist ebenfalls neben einem ersten Übergangsabschnitt einen zweiten Übergangsabschnitt auf. Der erste Übergangsabschnitt mündet in die zweite Profilblockkante 4, wohingegen der zweite Übergangsabschnitt in die dritte Profilblockkante 5 des Profilblocks 2 mündet. Die zweite Profilblockkante 4 und der erste Übergangsabschnitt definieren einen Winkel, der gleich 90° ist. Die dritte Profilblockkante 5 und der zweite Übergangsabschnitt 10 definieren einen sechsten Winkel 16, wobei der sechste Winkel 16 einen Betrag von 90° aufweist.

Sowohl der erste Übergangsabschnitt 9 als auch der zweite Übergangsabschnitt 10 der ersten Lamelle 6 weisen jeweils eine Länge auf, die ein Bruchteil der Lamelle 6 ist. Dasselbe liegt bei der Lamelle 7 vor, in der der erste Übergangsabschnitt als auch der zweite Übergangsabschnitt der zweiten Lamelle 7 jeweils eine Länge aufweisen, die ein Bruchteil der Lamelle 7 ist. Ferner ist der Profilblock 2 zu der Längsrichtung 8 des Laufstreifens um einen ersten Winkel 11 von 30° gekippt und weist eine Trapezform auf. Dabei sind die erste Profilblockkante 3 und eine vierte Profilblockkante parallel zueinander angeordnet und der zweite Winkel 12 weist einen Betrag von 60° auf. Des Weiteren weist der Profilblock 2 einen fünften Winkel 15 von 30° auf.

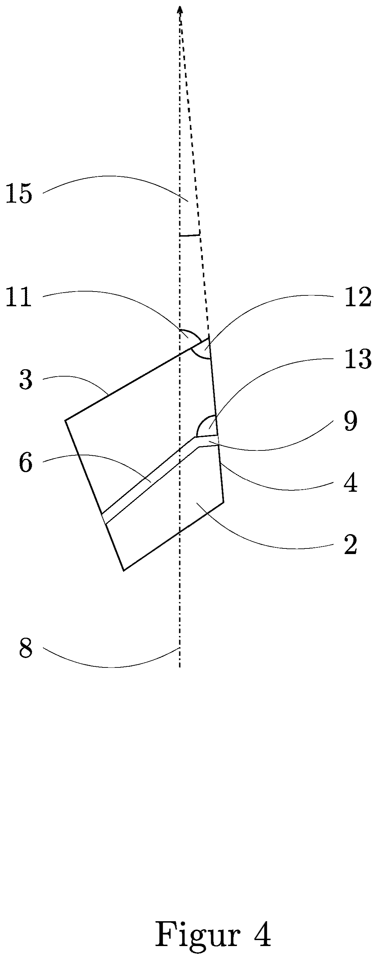

In der Ausführungsform des vorteilhaften Laufstreifens der Figur 4 ist die Lamelle 6 weder zu der ersten Profilblockkante 3 noch zu der vierten Profilblockkante 4 parallel angeordnet und weist somit einen Winkel ungleich 0° zu der ersten Profilblockkante 3 als auch einen Winkel ungleich 0° zu der vierten Profilblockkante auf. Zudem umfasst der erste Übergangsabschnitt 9 der Lamelle 6 eine Länge, die ein Bruchteil der Lamelle 6 ist. Darüber hinaus ist der Profilblock 2 zu der Längsrichtung 8 des Laufstreifens um einen ersten Winkel 11 von 60° gekippt. Der zweite Winkel 12 weist einen Betrag von 65° auf. Des Weiteren weist der Profilblock 2 einen fünften Winkel 15 von 5° auf.

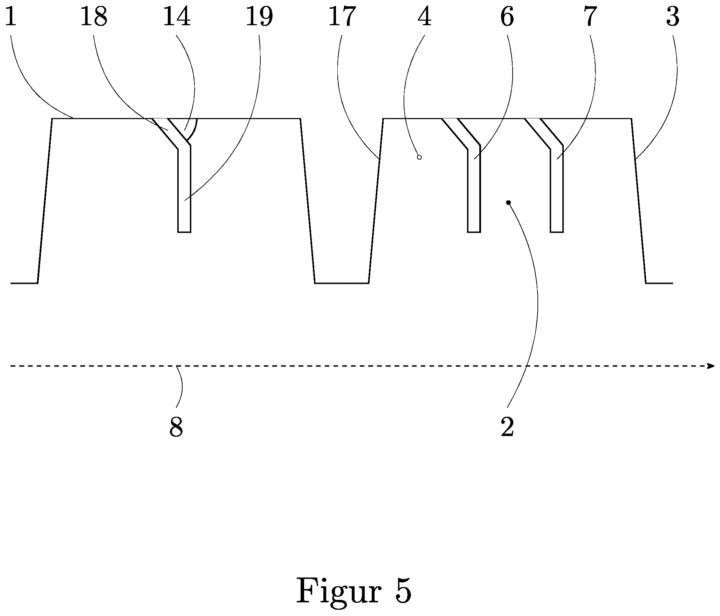

In der Figur 5 ist ein weiterer vorteilhafter Laufstreifen dargestellt. Im Gegensatz zu den Figuren 1 bis 4 ist in der Figur 5 der vorteilhafte Laufstreifen in einem Längsschnitt gezeigt, wobei der Längsschnitt entlang einer Längsrichtung 8 des Laufstreifens verläuft. Der vorteilhafte Laufstreifen umfasst eine Lauffläche 1, die ein Reifenprofil aufweist. In der Figur 5 weist das Reifenprofil mindestens zwei Profilblöcke auf. Ein erster Profilblock 2 umfasst eine erste Profilblockkante 3, eine zweite Profilblockkante 4 und eine vierte Profilblockkante 17. Ferner umfasst der erste Profilblock 2 eine erste Lamelle 6 und eine zweite Lamelle 7. Senkrecht zu der Lauffläche 1 sind die erste Lamelle 6 und die zweite Lamelle 7 jeweils in einen ersten Tiefenabschnitt 18 und in einen zweiten Tiefenabschnitt 19 unterteilt. Der zweite Tiefenabschnitt 19 der ersten Lamelle 6 als auch der zweite Tiefenabschnitt 19 der zweiten Lamelle 7 erstrecken sich senkrecht in Richtung der Lauffläche 1 von einem Lamellengrund. Der erste Tiefenabschnitt 18 der ersten Lamelle 6 verbindet den zweiten Tiefenabschnitt 19 der ersten Lamelle 6 mit der Lauffläche 1, wobei der erste Tiefenabschnitt 18 einen Winkel zwischen 0° und 90° zu der Lauffläche 1 als auch einen Winkel zwischen 0° und 90° zu dem zweiten Tiefenabschnitt 19 aufweist. Der erste Tiefenabschnitt 18 der zweiten Lamelle 7 verbindet den zweiten Tiefenabschnitt 19 der zweiten Lamelle 7 mit der Lauffläche 1, wobei der erste Tiefenabschnitt 18 einen Winkel zwischen 0° und 90° zu der Lauffläche 1 als auch einen Winkel zwischen 0° und 90° zu dem zweiten Tiefenabschnitt 19 aufweist.

### Bezugszeichenliste

1- Lauffläche
2 - Profilblock
3 - erste Profilblockkante
4 - zweite Profilblockkante
5 - dritte Profilblockkante
6 - Lamelle / erste Lamelle
7 - zweite Lamelle
8 - Längsrichtung
9 - Übergangsabschnitt / erster Übergangsabschnitt
10 - zweiter Übergangsabschnitt
11 - erster Winkel
12 - zweiter Winkel
13 - dritter Winkel
14 - vierter Winkel
15 - fünfter Winkel
16 - sechster Winkel
17 - vierte Profilblockkante
18 - erster Tiefenabschnitt
19 - zweiter Tiefenabschnitt

## Patentansprüche

1. Laufstreifen für einen Fahrzeugreifen, umfassend
eine Lauffläche (1), die mindestens einen Profilblock (2) aufweist,
wobei der Profilblock (2) eine erste Profilblockkante (3), eine zweite Profilblockkante (4) und eine Lamelle (6) umfasst,
wobei die erste Profilblockkante (3) einen ersten Winkel (11) kleiner 90° zu einer Längsrichtung (8) des Laufstreifens aufweist,
wobei die zweite Profilblockkante (4) mit der ersten Profilblockkante (3) einen zweiten Winkel (12) kleiner 90° einschließt,
wobei ein Übergangsabschnitt (9) der Lamelle (6) mit der zweiten Profilblockkante (4) einen dritten Winkel (13) zwischen 80° und 100° einschließt,
**dadurch gekennzeichnet, dass**
die Lamelle (6) sich in einem ersten Tiefenabschnitt (18) unter einem vierten Winkel (14) kleiner 90° von der Lauffläche (1) und in einem sich an den ersten Tiefenabschnitt (18) anschließenden zweiten Tiefenabschnitt (19) senkrecht zu der Lauffläche (1) in den Profilblock (2) erstreckt.

2. Laufstreifen nach Anspruch 1, **dadurch gekennzeichnet,**
**dass** der dritte Winkel (13) 90° ist.

3. Laufstreifen nach einem der vorhergehenden Ansprüche, **dadurch gekennzei chnet**,
dass der zweite Winkel (12) kleiner 60° ist.

4. Laufstreifen nach einem der vorhergehenden Ansprüche, **dadurch gekennzei chnet**,
dass der erste Winkel (11) kleiner 60° ist.

5. Laufstreifen nach einem der vorhergehenden Ansprüche, **dadurch gekennzei chnet**,
dass die zweite Profilblockkante (4) zu der Längsrichtung (8) einen fünften Winkel (15) kleiner 20°, besonders kleiner 15°, insbesondere kleiner 10° einschließt.

6. Laufstreifen nach einem der vorhergehenden Ansprüche, **dadurch gekennzei chnet**,
dass der Übergangsabschnitt (9) der Lamelle (6) ein erster Übergangsabschnitt ist, und dass die Lamelle (6) einen zweiten Übergangsabschnitt (10) aufweist, der entlang der Lauffläche (1) zu einer dritten Profilblockkante (5) des Profilblockes (2) einen sechsten Winkel (16) zwischen 80° und 100° einschließt.

7. Laufstreifen nach Anspruch 6, **dadurch gekennzeichnet,**
**dass** der sechste Winkel (16) 90° ist.

8. Laufstreifen nach einem der vorhergehenden Ansprüche, **dadurch gekennzei chnet**,
dass die Lamelle (6) eine erste Lamelle ist und der Profilblock (2) mindestens eine zweite Lamelle (7) aufweist.

9. Laufstreifen nach einem der vorhergehenden Ansprüche, **dadurch gekennzei chnet**,
dass der Profilblock (2) ein erster Profilblock ist und der Laufstreifen senkrecht zu der Längsrichtung (8) des Laufstreifens mindestens einen zweiten Profilblock aufweist, wobei der erste Profilblock (2) eine Anzahl an Lamellen (6, 7) aufweist, die sich von einer Anzahl an Lamellen des zweiten Profilblocks unterscheidet.

10. Fahrzeugreifen, umfassend einen Laufstreifen nach einem der Ansprüche 1 bis 9.
